# FASCICULE DE BREVET EUROPEEN

(11) **EP 2 897 919 B1**
(45) Date de publication et mention de la délivrance du brevet: **17.03.2021**
(21) Numéro de dépôt: 13763107.3
(22) Date de dépôt: 19.09.2013
(51) Int. Cl.: C04B 28/00, C04B 40/00, C04B 111/00

(54) **PROCÉDÉ POUR PRÉPARER UN MATÉRIAU COMPOSITE À PARTIR D'UN LIQUIDE ORGANIQUE ET MATÉRIAU AINSI OBTENU**
VERFAHREN ZUR HERSTELLUNG EINES VERBUNDWERKSTOFFS AUS EINER ORGANISCHEN FLÜSSIGKEIT UND HERGESTELLTER WERKSTOFF
PROCESS FOR PREPARING A COMPOSITE MATERIAL FROM AN ORGANIC LIQUID AND RESULTING MATERIAL

(30) Priorité: 21.09.2012 FR 1258880
(43) Date de publication de la demande: 29.07.2015
(73) Titulaire: Commissariat à l'Énergie Atomique et aux Énergies Alternatives, 75015 Paris (FR)
(72) Inventeur: LAMBERTIN, David, F-84860 Caderousse (FR); ROOSES, Adrien, F-84000 Avignon (FR); FRIZON, Fabien, F-30400 Villeneuve Les Avignon (FR)
(74) Mandataire: Brevalex
(86) Numéro de dépôt international: PCT/EP2013/069520
(87) Numéro de publication internationale: WO 2014/044776

(56) Documents cités:
- EP-A1- 1 887 065
- EP-A1- 2 199 359
- WO-A1-92/04298
- WO-A1-2010/121886
- WO-A1-2011/072785
- WO-A2-2011/068830
- DE-A1- 3 840 794
- KR-B1- 101 067 891
- SU-A1- 854 904
- US-A- 4 859 367
- US-A1- 2005 096 495
- DORITH TAVOR ET AL: "Recycling of Industrial Wastewater by Its Immobilization in Geopolymer Cement", INDUSTRIAL & ENGINEERING CHEMISTRY RESEARCH, vol. 46, 4 July 2007 (2007-07-04), pages 6801-6805, XP008184042, ISSN: 0888-5885, DOI: 10.1021/IE0616996 [retrieved on 2007-04-27]
- DATABASE WPI Week 200977 Thomson Scientific, London, GB; AN 2009-Q64572 & CN 101 560 068 A (UNIV XIAN ARCHITECTURE & TECHNOLOGY) 21 October 2009 (2009-10-21) & CN 101 560 068 A (UNIV XI AN ARCHITECTURE & TECH [CN]) 21 October 2009 (2009-10-21)
- PALACIOS M ET AL: "Effect of superplasticizer and shrinkage-reducing admixtures on alkali-activated slag pastes and mortars", CEMENT AND CONCRETE RESEARCH, PERGAMON PRESS, ELMSFORD, NY, US, vol. 35, no. 7, 1 July 2005 (2005-07-01), pages 1358-1367, XP027645790, ISSN: 0008-8846 [retrieved on 2005-07-01]

## Description

### DOMAINE TECHNIQUE

La présente invention appartient au domaine technique de l'élimination et du conditionnement des déchets et notamment des liquides organiques éventuellement contaminés.

La présente invention concerne un procédé permettant de préparer un matériau composite à partir d'un liquide organique et permettant, de fait, d'inerter un tel liquide en l'enrobant et/ou en l'encapsulant dans un géopolymère.

Le procédé selon la présente invention permet ainsi d'obtenir un matériau composite comprenant une matrice minérale géopolymère piégeant un liquide organique. La présente invention concerne également un matériau composite obtenu selon le procédé de la présente invention.

### ÉTAT DE LA TECHNIQUE ANTÉRIEURE

Dans le cadre de la gestion des déchets nucléaires et des déchets de laboratoire de recherche notamment dans l'industrie chimique, des liquides organiques, et plus particulièrement des huiles, éventuellement contaminés sont entreposés dans des installations en attente de traitement.

En effet, de tels liquides organiques présentent, en plus d'une éventuelle contamination, des risques dus notamment à leur volatilité, leur inflammabilité et/ou leur explosivité.

Ainsi, à l'heure actuelle, de nombreux procédés sont à l'étude pour traiter ces déchets organiques. Parmi ces derniers, on peut notamment citer l'incinération, l'oxydation aqueuse, la digestion acide, l'hydrolyse alcaline, la distillation, l'absorption sur des absorbants minéraux, la cimentation et l'absorption suivie d'une cimentation [1].

Une étude comparative réalisée par l'Agence internationale de l'énergie atomique (AIEA) des différents procédés de traitement pour différents déchets nucléaires organiques (huile, solution de scintillation, solvant d'extraction) mentionne les avantages et les inconvénients de chaque procédé **[1].** Il en ressort que les procédés à base de cimentation directe ou avec une étape préliminaire d'absorption sont faciles à mettre en œuvre mais les déchets organiques ne sont pas détruits et peuvent être lixiviés et surtout le volume de déchets final peut augmenter de façon significative.

Sur la cimentation directe, des travaux importants ont été réalisés aux USA en 1985 **[2].** Ils ont consisté en l'immobilisation directe d'huile de pompe et d'un mélange TBP/dodécane dans un ciment Portland avec des ajouts d'émulsifiant et d'accélérateur de prise. L'émulsifiant a été rajouté afin d'obtenir une seule phase entre l'eau et la phase organique et l'accélérateur de prise afin de permettre une prise rapide pour obtenir un bloc monolithique avant que les phases aqueuses et organiques ne se séparent.

Plus récemment, des études ont été réalisées sur l'influence d'organiques liquides dans les ciments Portland. Ces études ont montré que la présence d'organiques dans les pâtes de ciments Portland provoque un retard d'hydratation et des défauts de structure pouvant occasionner une lixiviation importante de composés organiques **[3-5].**

Il est préconisé dans la littérature **[5]** que l'immobilisation de liquides organiques dans un ciment Portland doit être accompagnée d'une étape d'absorption et ce, notamment sur charbons actifs **[6]** ou sur des argiles **[4, 7].** A titre d'exemples, des essais de traitement d'huiles usagées radioactives ont été réalisés par British Nuclear Group en Grande-Bretagne avec immobilisation de ces huiles sur un polymère absorbant qu'est le Nochar® **[8, 9]** puis enrobage dans un ciment Portland.

Une demande internationale sur une méthode d'immobilisation dans un géopolymère de résidus de schistes bitumeux a été publiée sous le numéro WO 2011/072777 **[10].** Dans l'invention décrite, les résidus de schistes bitumeux qui ne sont en rien des liquides organiques nécessitent, préalablement à leur immobilisation, plusieurs étapes préparatoires. En effet, ces résidus sont obtenus après une 1^{ère} étape de broyage de façon à obtenir une taille de grains inférieure à 10 mm, suivie d'une étape de combustion à une température supérieure à 900°C puis d'une 2^{nde} étape de broyage permettant d'obtenir des résidus de combustion présentant une taille de grains inférieure à 100 µm. Ces derniers sont mélangés aux matériaux réactifs utilisés pour préparer le géopolymère tels que des cendres volantes ou du kaolin calciné. Le mélange ainsi obtenu est ensuite activé par une solution d'activation comprenant des activateurs alcalins. A noter que le traitement thermique à une température supérieure à 900°C entraîne une décarbonisation.

La demande internationale WO 2011/068830 vise à préparer un matériau poreux consistant à combiner une résine géopolymère et un liquide pour former un mélange, solidifier le mélange pour former un solide dans lequel le liquide est incorporé et supprimer une partie du liquide moyennant quoi le matériau poreux est obtenu. Dans les exemples 13 et 14 de cette demande, le liquide mis en œuvre est une huile minérale et un biodiesel.

La demande de brevet KR 101 067 891 propose de renforcer ou réparer les structures en ciment en utilisant une composition géopolymérique. Cette composition est obtenue à partir d'un mélange poudreux contenant la source alumino-silicatée et d'un mélange liquide du type solution d'activation dans un rapport poudre/liquide de 1/0,3-0,8 (page 5, paragraphe 2). Ce mélange liquide contient une résine liquide qui peut être du latex styrène-butadiène.

Tavor et al, 2007 (Industrial & Engineering Chemistry Research, vol. 46, pages 6801-6805) propose de recycler des eaux usées industrielles en les immobilisant dans un géopolymère. Les eaux usées utilisées à cette fin contiennent un composé organique résiduel du type phénol.Au vu de l'intérêt quant à l'obtention de procédés et de matériaux permettant l'inertage de fluides organiques éventuellement contaminés, les inventeurs se sont fixés pour but de proposer un procédé simple, pratique et applicable au niveau industriel pour préparer de tels matériaux qui ne présentent pas les inconvénients des procédés listés ci-dessus.

### EXPOSÉ DE L'INVENTION

La présente invention permet de résoudre les inconvénients des procédés de conditionnement de liquides organiques de l'état de la technique et d'atteindre le but que se sont fixés les inventeurs à savoir proposer un procédé dans lequel les liquides organiques sont inertés, conditionnés et/ou immobilisés dans une matrice géopolymère.

En effet, les inventeurs ont montré que le pH très basique de la solution d'activation permet non seulement de maintenir une seule phase avec la phase organique (i.e. le liquide organique à inerter), mais aussi d'obtenir un bloc de géopolymère uniforme, une fois l'ajout d'une source alumino-silicatée et le processus de géopolymérisation effectués.

La présente invention consiste donc en une immobilisation directe d'un liquide organique dans un matériau géopolymère dans laquelle le matériau final ne présente pas de défaut de structure et dans laquelle aucun phénomène de lixiviation n'existe. Il convient de noter que, dans la présente invention, le déchet organique change d'état puisqu'il passe d'un état liquide potentiellement inflammable à un état solide du type géopolymère dans lequel le liquide organique est encapsulé voire micro-encapsulé.

Le matériau de type matrice géopolymère dans lequel est incorporé le liquide organique est donc facile à préparer, facile à manipuler et prêt à l'emploi.

La présente invention concerne un procédé pour préparer un matériau composite à partir d'un liquide organique, consistant à préparer un géopolymère par dissolution/polycondensation d'une source alumino-silicatée dans une solution d'activation comprenant ledit liquide organique, ledit procédé comprenant les étapes suivantes :
a) préparer une solution d'activation comprenant ledit liquide organique et au moins un tensioactif, ledit tensioactif étant présent dans une proportion comprise entre 1 et 10% en volume par rapport au volume total de ladite solution,
b) ajouter à la solution obtenue à l'étape (a) au moins une source alumino-silicatée,
c) soumettre le mélange obtenu à l'étape (b) à des conditions permettant le durcissement du géopolymère,
ledit liquide organique représentant entre 20 et 70% en volume par rapport au volume total dudit matériau composite, et
ledit liquide organique comprenant au plus 50% de triglycérides en masse par rapport à la masse sèche totale dudit liquide organique.

Par « matériau composite », on entend, dans le cadre de la présente invention, un assemblage d'une matrice géopolymère et d'un liquide organique. Cet assemblage peut se présenter sous la forme d'un mélange intime entre le liquide organique et la matrice géopolymère, d'une encapsulation du liquide organique par la matrice géopolymère, d'une micro-encapsulation du liquide organique par la matrice géopolymère et/ou d'un enrobage du liquide organique par la matrice géopolymère.

Plus particulièrement, le matériau composite selon l'invention se présente sous forme d'un géopolymère (ou matrice géopolymère) dans lequel(laquelle) des microbilles et/ou des nanobilles de liquide organique sont enrobées. Par « microbille », on entend une gouttelette de liquide organique dont le diamètre moyen est compris entre 1 et 1000 µm, notamment entre 10 et 900 µm et, en particulier entre 20 et 800 µm. Par « nanobille », on entend une gouttelette de liquide organique dont le diamètre moyen est compris entre 1 et 1000 nm, notamment entre 10 et 900 nm et, en particulier entre 20 et 800 nm. Les microbilles et les nanobilles de liquide organique présentes dans le matériau composite selon l'invention peuvent présenter des formes variées telles que des formes ovales ou sphéroïdes.

Avantageusement, le matériau composite selon la présente invention ne contient que des microbilles et/ou des nanobilles de liquide organique et une matrice géopolymère.

Par « liquide organique », on entend, dans le cadre de la présente invention, un liquide comprenant un composé et/ou un solvant, ledit composé et ledit solvant présentant au moins un atome de carbone et notamment au moins deux atomes de carbone.

Avantageusement, le liquide organique mis en œuvre dans le cadre de la présente invention est ou comprend au moins un élément choisi dans le groupe constitué par un hydrocarbure aliphatique ; un hydrocarbure aromatique ; un solvant chloré ; un solvant oxygéné tel qu'un alcool, une cétone, un ester, un ester de glycol et un éther oxyde ; un phosphate d'alkyle ou un chlorure d'alkyle. Les hydrocarbures utilisables dans le cadre de l'invention sont notamment les hydrocarbures issus du kérosène et leurs dérivés.

Ainsi, un liquide organique mis en œuvre dans le cadre de la présente invention peut être un agent dégraissant ou une huile notamment minérale. Par « agent dégraissant », on entend un liquide apte à éliminer un résidu présent à la surface d'un support par mise en contact avec ce support. Par « huile », on entend un liquide non miscible dans l'eau ou complètement soluble dans l'eau à une concentration inférieure ou égale à 2% en poids et ce, à 25°C et à pression atmosphérique.

Le liquide organique mis en œuvre dans le cadre de la présente invention comprend au plus 50% de triglycérides en masse par rapport à la masse totale sèche dudit liquide organique. Par « triglycéride », on entend un composé de formule H₂C(OR¹)-C(H)(OR²)-C(OR³)H₂ avec R¹, R² et R³, identiques ou différents, représentant un groupe de formule -C(=O)R avec R représentant un groupement carboné. Ce groupement carboné est notamment un groupement alkyle, linéaire, cyclique ou ramifié ; saturé ou insaturé ; de 1 à 40 atomes de carbone, avantageusement de 2 à 30 atomes de carbone ; éventuellement substitué et comprenant éventuellement au moins un hétéroatome choisi dans le groupe constitué par N, O, F, Cl, P, Si, Br et S.

Dans certaines formes de mise en œuvre de la présente invention, le liquide organique comprend au plus 40%, notamment au plus 30%, en particulier, au plus 20% et, tout particulièrement, au plus 10% de triglycérides en masse par rapport à la masse totale sèche dudit liquide organique. Dans une variante particulière, le liquide organique ne comprend aucun triglycéride tel que précédemment défini.

Du fait des limitations quant aux triglycérides dans le liquide organique mis en œuvre dans le cadre de la présente invention, il est évident que ce dernier ne peut être ni une huile végétale, ni un corps gras d'origine animale tel que de la graisse de bœuf.

En particulier, le liquide organique mis en œuvre dans le cadre de la présente invention est ou comprend au moins un élément choisi dans le groupe constitué par un liquide de scintillation commercial, du benzène, du toluène, du xylène, de l'éthylbenzène, du kérosène, de l'hexane, du cyclohexane, de l'octane, de l'éthylcyclohexane, du dodecane, de l'éicosane, du phénol, du dichlorométhane, du trichloroéthane, du dichlorobenzène, du trichloroéthylène, du 2-octanone, du 4-dodecanone, du phosphate de tributyle (TBP), du tétrahydrofurane (THF) et de l'éther diéthylique.

Le liquide organique mis en œuvre dans le cadre de la présente invention peut se présenter sous forme d'une solution, d'une émulsion, d'une micro-émulsion, d'une suspension ou d'une suspension colloïdale.

Avantageusement, le liquide organique mis en œuvre dans le cadre de la présente invention est un déchet liquide organique, notamment issu d'une installation nucléaire, d'un laboratoire de recherche, d'une industrie chimique, d'un hôpital ou d'un laboratoire d'analyses médicales. Ainsi, le liquide organique mis en œuvre dans le cadre de la présente invention peut comprendre un (ou plusieurs) métal/aux lourd(s), élément(s) trace(s) ou radioélément(s) notamment choisi(s) parmi le tritium (³H), le carbone (¹⁴C), le chlore (³⁶Cl), le fluor (¹⁸F), le potassium (⁴⁰K), le calcium (⁴⁵Ca), le cobalt (⁶⁰Co), le nickel (⁶³Ni), le soufre, le zinc, le phosphore, le mercure, le plomb, le cadmium, le krypton (⁸⁵Kr), l'arsenic, le strontium (⁹⁰Sr), le ruthénium, le césium, des émetteurs a, tels que l'américium, le plutonium et l'uranium et leurs mélanges.

Dans une variante toute particulière de l'invention, le liquide organique mis en œuvre se trouve sous forme supportée. Par « liquide organique supporté », on entend au sens de l'invention un liquide organique tel que précédemment défini, mélangé à un support voire maintenu, déposé ou greffé à la surface dudit support au moyen de liaisons covalentes ou de liaisons non covalentes et de faible énergie telles que des liaisons hydrogène ou des liaisons de Van der Waals. Le support mis en œuvre dans le cadre de cette forme de mise en œuvre particulière peut être de la terre, du sable, de l'argile, un gravat, un granulat, du gravier ou un de leurs mélanges.

Par « géopolymère » ou « matrice géopolymère », on entend dans le cadre de la présente invention un matériau solide et poreux à l'état sec, obtenu suite au durcissement d'un mélange plastique contenant des matériaux finement broyés (i.e. la source alumino-silicatée) et une solution saline (i.e. la solution d'activation), ledit mélange plastique étant capable de faire prise et de durcir au cours du temps. Ce mélange peut également être désigné sous les termes « mélange géopolymérique » ou « composition géopolymérique ». Le durcissement du géopolymère est le résultat de la dissolution/polycondensation des matériaux finement broyés du mélange géopolymérique dans une solution saline telle qu'une solution saline de fort pH (i.e. la solution d'activation).

Plus particulièrement, un géopolymère ou matrice géopolymère est un polymère inorganique alumino-silicaté amorphe. Ledit polymère est obtenu à partir d'un matériau réactif contenant essentiellement de la silice et de l'aluminium (i.e. la source alumino-silicatée), activé par une solution fortement alcaline, le rapport massique solide/solution dans la formulation étant faible. La structure d'un géopolymère est composée d'un réseau Si-O-AI formé de tétraèdres de silicates (SiO₄) et d'aluminates (AlO₄) liés en leurs sommets par partage d'atomes d'oxygène. Au sein de ce réseau, se trouve(nt) un (ou plusieurs) cation(s) compensateur(s) de charge également appelé(s) cation(s) de compensation qui permettent de compenser la charge négative du complexe AlO₄⁻. Ledit (ou lesdits) cation(s) de compensation est(sont) avantageusement choisi(s) dans le groupe constitué par les métaux alcalins tels que le lithium (Li), le sodium (Na), le potassium (K), le rubidium (Rb) et le césium (Cs), les métaux alcalino-terreux tels que le magnésium (Mg), le calcium (Ca), le strontium (Sr) et le barium (Ba) et leurs mélanges.

Les expressions « matériau réactif contenant essentiellement de la silice et de l'aluminium » et « source alumino-silicatée » sont, dans la présente invention, similaires et utilisables de façon interchangeable.

Le matériau réactif contenant essentiellement de la silice et de l'aluminium utilisable pour préparer la matrice géopolymére mise en œuvre dans le cadre de l'invention est avantageusement une source solide contenant des alumino-silicates amorphes. Ces alumino-silicates amorphes sont notamment choisis parmi les minéraux d'alumino-silicates naturels tels que illite, stilbite, kaolinite, pyrophyllite, andalousite, bentonite, kyanite, milanite, grovénite, amésite, cordiérite, feldspath, allophane, etc... ; des minéraux d'alumino-silicates naturels calcinés tels que le métakaolin; des verres synthétiques à base d'alumino-silicates purs; du ciment alumineux; de la ponce; des sous-produits calcinés ou résidus d'exploitation industrielle tels que des cendres volantes et des laitiers de haut fourneau respectivement obtenus à partir de la combustion du charbon et lors de la transformation du minerai de fer en fonte dans un haut fourneau ; et des mélanges de ceux-ci.

La solution saline de fort pH également connue, dans le domaine de la géopolymérisation, comme « solution d'activation » est une solution aqueuse fortement alcaline pouvant éventuellement contenir des composants silicatés notamment choisis dans le groupe constitué par la silice, la silice colloïdale et la silice vitreuse.

Les expressions « solution d'activation », « solution saline de fort pH » et « solution fortement alcaline » sont, dans la présente invention, similiaires et utilisables de façon interchangeable.

Par « fortement alcaline » ou « de fort pH », on entend une solution dont le pH est supérieur à 9, notamment supérieur à 10, en particulier, supérieur à 11 et, plus particulièrement supérieur à 12. En d'autres termes, la solution d'activation présente une concentration en OH⁻ supérieure à 0,01 M, notamment supérieure à 0,1 M, en particulier supérieure à 1 M et, plus particulièrement, comprise entre 5 et 20 M.

La solution d'activation comprend le cation de compensation ou le mélange de cations de compensation sous forme d'une solution ionique ou d'un sel. Ainsi, la solution d'activation est notamment choisie parmi une solution aqueuse de silicate de sodium (Na₂SiO₃), de silicate de potassium (K₂SiO₂), d'hydroxyde de sodium (NaOH), d'hydroxyde de potassium (KOH), d'hydroxyde de calcium (Ca(OH)₂), d'hydroxyde de césium (CsOH) et leurs dérivés etc....

Le procédé selon la présente invention comprend les étapes suivantes :
a) préparer une solution d'activation comprenant ledit liquide organique,
b) ajouter à la solution obtenue à l'étape (a) au moins une source alumino-silicatée,
c) soumettre le mélange obtenu à l'étape (b) à des conditions permettant le durcissement du géopolymère.

L'étape (a) du procédé selon la présente invention consiste à ajouter à une solution d'activation telle que précédemment définie, préalablement préparée le liquide organique à inerter, ledit liquide organique pouvant être supporté. La préparation préalable de la solution d'activation est une étape classique dans le domaine des géopolymères.

Comme précédemment expliqué, la solution d'activation peut éventuellement contenir un (ou plusieurs) composant(s) silicaté(s) notamment choisi(s) dans le groupe constitué par la silice, la silice colloïdale et la silice vitreuse. Lorsque la solution d'activation contient un (ou plusieurs) composant(s) silicaté(s), ce (ou ces) dernier(s) est(sont) présent(s) en une quantité comprise entre 100 mM et 10 M, notamment entre 500 mM et 8 M et, en particulier, entre 1 et 6 M dans la solution d'activation.

Le liquide organique est ajouté à la solution activation en une fois ou en plusieurs fois et voire au goutte à goutte ou par saupoudrage dans le cas d'un liquide organique supporté. Une fois le liquide organique ajouté à la solution d'activation, la solution obtenue est mélangée en utilisant un malaxeur, un agitateur, un barreau magnétique, un bain à ultrasons ou un homogénéisateur. Le mélange/malaxage lors de l'étape (a) du procédé selon l'invention se fait à une vitesse relativement soutenue. Par « vitesse relativement soutenue », on entend, dans le cadre de la présente invention, une vitesse supérieure à 250 tr/min, notamment supérieure ou égale à 350 tr/min. Une telle agitation permettant d'obtenir une solution uniforme notamment une solution homogène ou une solution du type micro-émulsion.

L'étape (a) du procédé selon l'invention est effectuée à une température comprise entre 10°C et 40°C, avantageusement entre 15°C et 30°C et, plus particulièrement, à température ambiante (i.e. 23°C ± 5°C) pendant une durée supérieure à 6 h, notamment supérieure à 10 h, en particulier comprise entre 10 h et 48 h et, plus particulièrement notamment entre 12 h et 36 h.

A noter qu'il est nécessaire, lors de l'étape (a), d'utiliser au moins un tensioactif, i.e. une molécule comportant une partie lipophile (apolaire) et une partie hydrophile (polaire), et ce, de façon à obtenir une solution uniforme suite à l'étape (a) du procédé selon l'invention. En d'autres termes, un (ou plusieurs) tensioactif(s) doi(ven)t être ajouté(s) pour augmenter la miscibilité ou la dispersion du liquide organique dans la solution d'activation.

Le (ou les) tensioactif(s) peu(ven)t être ajouté(s) (i) à la solution d'activation préalablement à l'ajout du liquide organique, (ii) au liquide organique préalablement à son ajout dans la solution d'activation ou (iii) à la solution d'activation dans laquelle le liquide organique a déjà été ajouté.

Parmi les tensioactifs utilisables dans le cadre de la présente invention, on peut citer :
i) les tensioactifs anioniques dont la partie hydrophile est chargée négativement tels que les alkyle ou aryle sulfonates, sulfates, phosphates, ou sulfosuccinates associés à un contre ion comme un ion ammonium (NH⁴⁺), un ammonium quaternaire tel que tétrabutylammonium, et les cations alcalins tels que Na⁺, Li⁺ et K⁺. A titre de tensioactifs anioniques, il est, par exemple, possible d'utiliser le paratoluènesulfonate de tetraéthylammonium, le dodécylsulfate de sodium, le palmitate de sodium, le stéarate de sodium, le myristate de sodium, le di(2-éthylhexyl) sulfosuccinate de sodium, le méthylbenzène sulfonate et l'éthylbenzène sulfonate.
ii) les tensioactifs cationiques dont la partie hydrophile est chargée positivement, notamment choisis parmi les ammoniums quaternaires comportant au moins une chaîne aliphatique en C4-C22 associés à un contre ion anionique choisi notamment parmi les dérivés du bore tels que le tetrafluoroborate ou les ions halogénures tels que F⁻, Br⁻, I⁻ ou Cl⁻ A titre de tensioactifs cationiques, il est, par exemple, possible d'employer le chlorure tétrabutylammonium, le chlorure tetradécylammonium, le bromure de tetradécyltriméthyle ammonium (TTAB), les halogénures d'alkylpyridinium portant une chaîne aliphatique et les halogénures d'alkylammonium.
iii) les tensioactifs zwittérioniques qui sont des composés neutres possédant des charges électriques formelles d'une unité et de signe opposé, notamment choisis parmi les composés présentant une chaîne alkyle en C5-C20 substituée généralement par une fonction chargée négativement comme un sulfate ou un carboxylate et une fonction chargée positivement comme un ammonium. A titre de tensioactifs zwittérioniques, on peut citer le N,N diméthyldodécylammoniumbutanate de sodium, le diméthyldodécylammonium propanate de sodium et les acides aminés.
iv) les tensioactifs amphotères qui sont des composés se comportant à la fois comme un acide ou comme une base selon le milieu dans lequel ils sont placés. A titre de tensioactifs amphotères, il est possible d'utiliser le lauroamphodiacétate de disodium, les bétaïnes comme l'alkylamidopropylbétaïne ou la laurylhydroxysulfobétaïne.
v) les tensioactifs neutres (non-ioniques) dont les propriétés tensioactives, notamment l'hydrophilie, sont apportées par des groupements fonctionnels non chargés tels qu'un alcool, un éther, un ester ou encore une amide, contenant des hétéroatomes tels que l'azote ou l'oxygène ; en raison de la faible contribution hydrophile de ces fonctions, les composés tensioactifs non ioniques sont le plus souvent polyfonctionnels. A titre de tensioactifs non-ioniques, il est possible d'employer les polyéthers comme les tensioactifs polyéthoxylés tels que par exemple le lauryléther de polyéthylèneglycol (POE23 ou Brij ® 35), les polyols (tensioactifs dérivés de sucres) en particulier les alkylates de glucose tels que par exemple l'hexanate de glucose.

La quantité de tensioactif(s) utilisée dans le cadre de la présente invention dépendra grandement du liquide organique et de la solution d'activation utilisés dans le procédé. L'homme du métier saura déterminer la quantité adéquate au moyen d'essais de routine. Dans la solution d'activation contenant le liquide organique, le tensioactif est présent dans une proportion comprise entre 1 et 10% en volume par rapport au volume total de ladite solution.

L'étape (b) du procédé selon l'invention consiste à mettre en contact la solution d'activation comprenant le liquide organique et un tensioactif et la source alumino-silicatée telle que précédemment définie.

La source alumino-silicatée peut être versée en une ou en plusieurs fois sur la solution d'activation contenant le liquide organique et un tensioactif. Dans une forme de mise en œuvre particulière de l'étape (b), la source alumino-silicatée peut être saupoudrée sur la solution d'activation contenant le liquide organique et un tensioactif.

Avantageusement, l'étape (b) du procédé selon l'invention est mise en œuvre dans un malaxeur dans lequel la solution d'activation contenant le liquide organique et un tensioactif a été préalablement introduite. Tout malaxeur connu de l'homme du métier est utilisable dans le cadre de la présente invention. A titre d'exemples non limitatifs, on peut citer un mélangeur NAUTA®, un malaxeur HOBART® et un malaxeur HENSCHEL®.

L'étape (b) du procédé selon l'invention comprend donc un mélange ou malaxage de la solution d'activation contenant le liquide organique et un tensioactif avec la source alumino-silicatée. Le mélange/malaxage lors de l'étape (b) du procédé selon l'invention se fait à une vitesse relativement lente. Par « vitesse relativement lente », on entend, dans le cadre de la présente invention, une vitesse de rotation du rotor du malaxeur inférieure ou égale à 250 tr/min, notamment supérieure ou égale à 50 tr/min et, en particulier, comprise entre 100 et 250 tr/min. A titre d'exemple non limitatif, dans le cas d'un malaxeur normalisé, la vitesse d'agitation est de 200 tr/min.

L'étape (b) du procédé selon l'invention est effectuée à une température comprise entre 10°C et 40°C, avantageusement entre 15°C et 30°C et, plus particulièrement, à température ambiante (i.e. 23°C ± 5°C) pendant une durée supérieure à 2 min, notamment comprise entre 4 min et 1h et, en particulier comprise entre 5 min et 30 min.

L'homme du métier saura déterminer la quantité de source alumino-silicatée à utiliser dans le cadre de la présente invention en fonction de ses connaissances dans le domaine de la géopolymérisation ainsi que de la nature du liquide organique mis en œuvre et de la quantité de liquide organique et de solution d'activation mise en œuvre.

Avantageusement, dans le procédé selon la présente invention, le rapport massique solution activation/MK avec solution d'activation représentant la masse de solution d'activation contenant le liquide organique et un tensioactif (exprimée en g) et MK représentant la masse de source alumino-silicatée (exprimée en g) utilisé est avantageusement compris entre 0,6 et 2 et notamment entre 1 et 1,5. A titre d'exemple particulier, le rapport solution activation/MK est de l'ordre de 1,28 (i.e. 1,28 ± 0,1). Un rapport solution d'activation/MK compris entre 1,2 et 1,4 permet de garantir une quantité et une taille des pores dans le géopolymère propices à l'encapsulation et notamment à la micro-encapsulation de liquide organique.

De plus, outre la source alumino-silicatée, du sable, un granulat et/ou des fines peu(ven)t être ajouté(es) à la solution d'activation lors de l'étape (b) du procédé selon l'invention.

Par « granulat », on entend un matériau granulaire, naturel, artificiel ou recyclé dont la dimension moyenne des grains est avantageusement comprise entre 10 et 125 mm.

Les fines également appelées « fillers » ou « fines d'addition » est un produit sec, finement divisé, issu de la taille, du sciage ou du travail de roches naturelles, de granulats tels que précédemment définis et des pierres ornementales. Avantageusement, les fines présentent une dimension moyenne des grains notamment comprise entre 5 et 200 µm.

Le sable, le granulat et/ou les fines sont ajouté(es) pour mieux réguler la hausse de température lors de l'étape (c) du procédé mais également pour optimiser les propriétés physiques et mécaniques du matériau composite obtenu.

Le sable éventuellement ajouté lors de l'étape (b) peut être un sable calcaire ou un sable siliceux. Avantageusement, il s'agit d'un sable siliceux qui permet d'atteindre les meilleurs résultats en ce qui concerne l'optimisation des propriétés physiques et mécaniques du matériau composite obtenu. Par « sable siliceux », on entend, dans le cadre de la présente invention, un sable constitué à plus de 90%, notamment à plus de 95%, en particulier à plus de 98% et, plus particulièrement, à plus de 99% de silice (SiO₂). Le sable siliceux mis en œuvre dans la présente invention présente avantageusement une dimension moyenne des grains notamment inférieure à 10 mm, notamment inférieure à 7 mm et, en particulier, inférieure à 4 mm. A titre d'exemple particulier, on peut utiliser un sable siliceux présentant une dimension moyenne des grains comprise entre 0,2 et 2mm.

Lorsque du sable est ajouté en plus de la source alumino-silicatée à la solution d'activation, le rapport massique entre sable et source alumino-silicatée est compris 2/1 et 1/2, notamment entre 1,5/1 et 1/1,5 et, en particulier, entre 1,2/1 et 1/1,2.

L'étape (c) du procédé selon l'invention consiste à soumettre le mélange obtenu à l'étape (b) à des conditions permettant le durcissement du mélange géopolymérique.

Toute technique connue de l'homme du métier pour faire durcir un mélange géopolymérique dans lequel est présent le liquide organique est utilisable lors de l'étape de durcissement du procédé.

Les conditions permettant le durcissement lors de l'étape (c) comprennent avantageusement une étape de cure éventuellement suivie d'une étape de séchage. L'étape de cure peut se faire à l'air libre, sous eau, dans des moules hermétiques divers, par humidification de l'atmosphère entourant le mélange géopolymérique ou par application d'un enduit imperméable sur ledit mélange. Cette étape de cure peut être mise en oeuvre sous une température comprise entre 10 et 80°C, notamment entre 20 et 60°C et, en particulier, entre 30 et 40°C et peut durer entre 1 et 40 jours, voire plus longtemps. Il est évident que la durée de la cure dépend des conditions mises en œuvre lors de cette dernière et l'homme du métier saura déterminer la durée la plus adaptée, une fois les conditions définies et éventuellement par des tests de routine.

Lorsque l'étape de durcissement comprend une étape de séchage, en plus de l'étape de cure, ce séchage peut se faire à une température comprise entre 30 et 90°C, notamment entre 40 et 80°C et, en particulier, entre 50 et 70°C et peut durer entre 6 h et 10 jours, notamment entre 12 h et 5 jours et, en particulier, entre 24 et 60 h.

De plus, préalablement au durcissement du mélange géopolymèrique dans lequel est présent le liquide organique, ce dernier peut être placé dans des moules de façon à lui conférer une forme prédéterminée suite à ce durcissement.

La présente invention concerne également un procédé pour le traitement et/ou l'inertage d'un liquide organique consistant à préparer un matériau composite à partir dudit liquide organique selon un procédé tel que précédemment défini.

Par « traitement et/ou inertage d'un liquide organique », on entend, dans le cadre de la présente invention, une solidification et une stabilisation dudit liquide organique en un matériau solide présentant une perméabilité à l'eau et une fraction lixiviable réduites.

La présente invention concerne également un matériau composite susceptible d'être préparé par mise en œuvre du procédé selon la présente invention.

Avantageusement et comme précédemment expliqué, le matériau composite selon l'invention se présente sous forme d'un géopolymère (ou matrice géopolymère) dans lequel(laquelle) des microbilles et/ou des nanobilles de liquide organique sont enrobées.

Dans le matériau objet de la présente invention, le liquide organique est incorporé dans la matrice géopolymère jusqu'à un taux d'incorporation de 70% en volume par rapport au volume total dudit matériau composite et typiquement à un taux d'incorporation compris entre 20 et 70% en volume par rapport au volume total dudit matériau composite. En d'autres termes, le liquide organique représente entre 20 et 70% en volume par rapport au volume total du matériau composite objet de l'invention ou matériau composite préparé selon le procédé objet de l'invention. Avantageusement, ce taux d'incorporation est compris entre 20 et 60%, notamment entre 20 et 50% et, en particulier, entre 20 et 40% en volume par rapport au volume total dudit matériau composite. A titre d'exemples particuliers, ce taux d'incorporation peut être de 20% ou de l'ordre de 30% (i.e. 30% ± 5%) en volume par rapport au volume total dudit matériau composite.

D'autres caractéristiques et avantages apparaîtront encore à l'homme du métier à la lecture des exemples ci-dessous donnés en référence aux figures annexées.

### BRÈVE DESCRIPTION DES DESSINS

La Figure 1 est une vue d'une solution d'activation avec 30% en masse d'huile.
La Figure 2 est une vue du malaxage de la solution d'activation avec l'huile après ajout de métakaolin.
La Figure 3 est une vue des éprouvettes de géopolymère contenant 20% en volume d'huile.
La Figure 4 est une vue d'une éprouvettes 4 x 4 x 16 cm³ de géopolymere contenant 20% en volume de liquide de scintillation.

### EXPOSÉ DÉTAILLÉ DE MODES DE RÉALISATION PARTICULIERS (non conforme à l'invention, car aucun tensioactif n'est présent)

Un mortier de géopolymère a été préparé avec 20% en volume d'huile.

### I. Matières premières.

Les produits employés pour le géopolymère sont du métakaolin de Pieri Premix MK (Grade Construction Products), du NaOH (Prolabo, 98%), du SiO₂ (Tixosil, Rhodia), du sable siliceux (Sibelco) et de l'huile de moteur comme déchet organique.

La composition est reportée dans le tableau 1 ci-dessous.

**Tableau 1 : Composition du mortier pour la micro-encapsulation d'huile**

| | Composition liant (en g) | masse solution activation/Métakaolin |
|---|---|---|
| Mortier géopolymère avec huile | SiO₂ : 223 | 1,28 |
| | NaOH : 242 | |
| | Metakaolin : 882 | |
| | Sable : 821 | |
| | Huile : 321 | |

### II. Mode opératoire ne faisant pas partie de l'invention.

### II.1. Préparation de la solution d'activation.

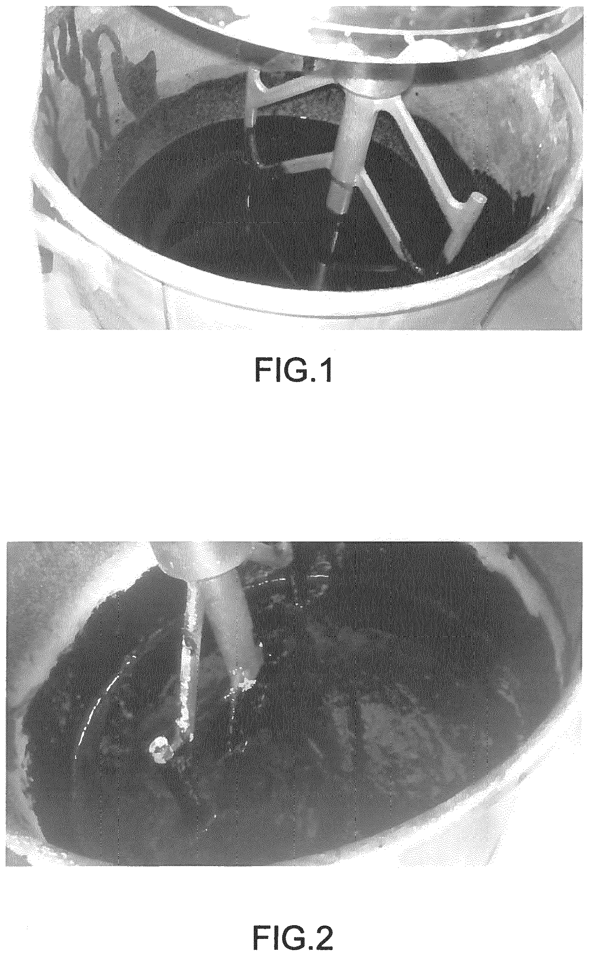

Les étapes de cette préparation sont les suivantes :
- Préparation d'une solution de soude concentrée (10 M),
- Ajout de la silice Tixosil sous agitation pour obtenir une solution d'activation,
- Ajout de l'huile à la solution d'activation,
- Agitation soutenue à 300 tr/min pendant minimum 10 heures pour obtenir une solution uniforme,
- Transfert du mélange dans un malaxeur en vue de la géopolymérisation (Figure 1).

### II.2. Géopolymérisation.

Le mélange métakaolin + sable est ajouté à la solution d'activation (Figure 2).

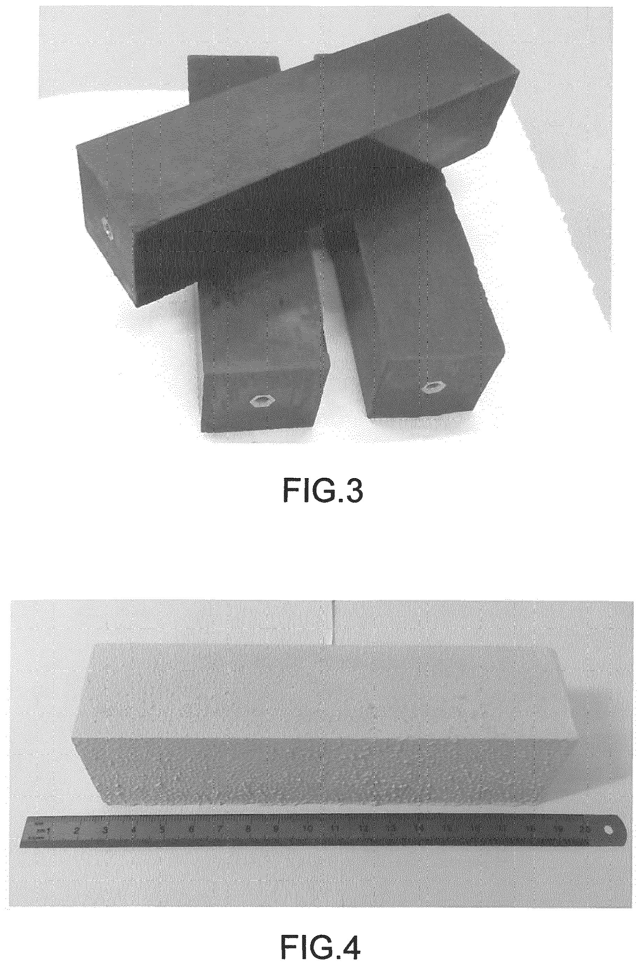

Le mortier géopolymère contenant l'huile est versé dans des moules pour obtenir des éprouvettes de mesure (Figure 3). Les moules hermétiques sont conservés dans une étuve à atmosphère contrôlée (20°C et pression atmosphérique) pendant toute la cure qui a duré au minimum 3 jours.

### III. Matériau obtenu et ses propriétés.

Sur la Figure 3, l'obtention d'un bloc monolithique de géopolymère avec l'huile est clairement visible.

Ces éprouvettes ont donc été caractérisées par des tests de résistance mécanique après un stockage sous air, sous sac et étanche, sous forme de deux essais indépendants (essai 1 et essai 2). Les résultats sont reportés dans le Tableau 2. Le géopolymère présente de bonnes propriétés mécaniques (> 8 MPa compatible aux exigences ANDRA) et l'intégrité du matériaux après 28 jours de conservation est démontré.

**Tableau 2 : Propriétés mécaniques à 28 jours des géopolymères contenant 20% en volume d'huile**

| Flexion (MPa) | Stockage sous air | Stockage sous sac | Stockage sous eau |
|---|---|---|---|
| Essai 1 | 2,235 | 3,095 | 2,612 |
| Essai 2 | 3,574 | 2,998 | 2,509 |

| Compression (MPa) | Stockage sous air | Stockage sous sac | Stockage sous eau |
|---|---|---|---|
| Essai 1 | 25,69 | 23,81 | 22,63 |
| Essai 2 | 29,00 | 23,06 | 23,44 |

### IV. Autre exemple.

Une pâte de géopolymere a été préparée avec 20% en volume de liquide de scintillation Ultima gold XR de chez Perkin Elmer.

La composition et les propriétés mécaniques sont reportées dans le Tableau 3.

**Tableau 3 : Composition du mortier pour la micro-encapsulation de liquide de scintillation**

| | Composition liant (en g) | eau/Métakaolin | Propriétés mécaniques à 28 jours sous air |
|---|---|---|---|
| Pâte de géopolymere avec liquide de scintillation | SiO₂ : 21,6 | 0,77 | 30 MPa en compression |
| | NaOH : 24 | | |
| | Metakaolin : 79,7 | | |
| | Liquide de scintillation : 22 | | 5,4 MPa en flexion |
| | | | |

Le mode opératoire pour la préparation de la pâte de géopolymère avec le liquide de scintillation est identique à celui présenté précédemment avec l'huile.

Le mortier géopolymère contenant le liquide de scintillation est versé dans des moules pour obtenir des éprouvettes de mesure (Figure 4).

### RÉFÉRENCES

**[1]** IAEA. Treatment and conditioniong of radioactive organic liquids, IAEA-TECDOC656. 1992.
**[2]** Greenhalgh W. HEDL-SA-3377-FA, Handford Engineering Development Laboratory, USA. 1985.
**[3]** Natali Sora I, Pelosato R, Botta D, Dotelli G. Chemistry and microstructure of cement pastes admixed with organic liquids. Journal of the European Ceramic Society. 2002; 22: 1463-73.
**[4]** Montgomery DM, Sollars CJ, Perry R. Optimization of Cement-Based Stabilization/ Solidification of Organic-Containing Industrial Wastes Using Organophilic Clays. Waste Management & Research. 1991; 9: 21-34.
**[5]** Pollard SJT, Montgomery DM, Sollars CJ, Perry R. Organic compounds in the cement-based stabilisation/ solidification of hazardous mixed wastes-Mechanistic and process considérations. Journal of Hazardous Materials. 1991; 28: 313-27.
**[6]** Hebatpuria VM, Arafat HA, Rho HS, Bishop PL, Pinto NG, Buchanan RC. Immobilization of phenol in cement-based solidified/stabilized hazardous wastes using regenerated activated carbon: leaching studies. Journal of Hazardous Materials. 1999; 70: 117-38.
**[7]** Zhu L, Chen B, Shen X. Sorption of Phenol, p-Nitrophenol, and Aniline to Dual-Cation Organobentonites from Water. Environmental Science & Technology. 1999; 34: 468-75.
**[8]** Cassidy H, Kelley D. Oil Immobilization Program at Sellafield: An Innovative Approach. WM 07. Tucson, USA2007.
**[9]** Nochar Newsletter. Volume 3, N°1. 2005.
**[10]** Demande internationale au nom de OUT-OTEC OYJ publiée le 23 juin 2011.

## Revendications

1. Procédé pour préparer un matériau composite à partir d'un liquide organique, consistant à préparer un géopolymère par dissolution/polycondensation d'une source alumino-silicatée dans une solution d'activation comprenant ledit liquide organique, ledit procédé comprenant les étapes suivantes :
a) préparer une solution d'activation comprenant ledit liquide organique et au moins un tensioactif, ledit tensioactif étant présent dans une proportion comprise entre 1 et 10% en volume par rapport au volume total de ladite solution,
b) ajouter à la solution obtenue à l'étape (a) au moins une source alumino-silicatée,
c) soumettre le mélange obtenu à l'étape (b) à des conditions permettant le durcissement du géopolymère,
ledit liquide organique représentant entre 20 et 70% en volume par rapport au volume total dudit matériau composite, et
ledit liquide organique comprenant au plus 50% de triglycérides en masse par rapport à la masse sèche totale dudit liquide organique.

2. Procédé selon la revendication 1, **caractérisé en ce que** ledit liquide organique est ou comprend au moins un élément choisi dans le groupe constitué par un hydrocarbure aliphatique ; un hydrocarbure aromatique ; un solvant chloré ; un solvant oxygéné tel qu'un alcool, une cétone, un ester, un ester de glycol et un éther oxyde ; un phosphate d'alkyle ou un chlorure d'alkyle.

3. Procédé selon la revendication 1 ou 2, **caractérisé en ce que** ledit liquide organique est ou comprend au moins un élément choisi dans le groupe constitué par un liquide de scintillation commercial, du benzène, du toluène, du xylène, de l'éthylbenzène, du kérosène, de l'hexane, du cyclohexane, de l'octane, de l'éthylcyclohexane, du dodecane, de l'éicosane, du phénol, du dichlorométhane, du trichloroéthane, du dichlorobenzène, du trichloroéthylène, du 2-octanone, du 4-dodecanone, du phosphate de tributyle (TBP), du tétrahydrofurane (THF) et de l'éther diéthylique.

4. Procédé selon l'une quelconque des revendications 1 à 3, **caractérisé en ce que** ledit liquide organique est sous forme supportée.

5. Procédé selon la revendication 4, **caractérisé en ce que** ledit support est de la terre, du sable, de l'argile, un gravat, un granulat, du gravier ou un de leurs mélanges

6. Procédé selon l'une quelconque des revendications 1 à 5, comprend un (ou plusieurs) métal/aux lourd(s), élément(s) trace(s) ou radioélément(s).

7. Procédé selon l'une quelconque des revendications précédentes, **caractérisé en ce que** ladite solution d'activation contient un (ou plusieurs) composant(s) silicaté(s) notamment choisi(s) dans le groupe constitué par la silice, la silice colloïdale et la silice vitreuse.

8. Procédé selon l'une quelconque des revendications précédentes, **caractérisé en ce que** le rapport massique solution activation/MK avec solution d'activation représentant la masse de solution d'activation contenant le liquide organique et un tensioactif (exprimée en g) et MK représentant la masse de source alumino-silicatée (exprimée en g) utilisé est compris entre 0,6 et 2 et notamment entre 1 et 1,5.

9. Procédé selon l'une quelconque des revendications précédentes, caractérisé **caractérisé en ce que**, outre ladite source alumino-silicatée, du sable, un granulat et/ou des fines peu(ven)t être ajouté(es) à la solution d'activation lors de ladite étape (b).

10. Procédé selon l'une quelconque des revendications précédentes, **caractérisé en ce que** les conditions permettant le durcissement lors de ladite étape (c) comprennent une étape de cure éventuellement suivie d'une étape de séchage.

11. Procédé pour le traitement et/ou l'inertage d'un liquide organique consistant à préparer un matériau composite à partir dudit liquide organique selon un procédé tel que défini à l'une quelconque des revendications précédentes.

12. Matériau composite préparé selon un procédé tel que défini à l'une quelconque des revendications 1 à 10, **caractérisé en ce qu'**il se présente sous forme d'une matrice géopolymère dans laquelle des microbilles et/ou des nanobilles de liquide organique sont enrobées et **en ce que** ledit liquide organique représente entre 20 et 70% en volume par rapport au volume total dudit matériau composite.

13. Matériau composite selon la revendication 12, **caractérisé en ce que** ledit liquide organique est incorporé dans ladite matrice géopolymère jusqu'à un taux d'incorporation compris entre 20 et 60%, notamment entre 20 et 50% et, en particulier, entre 20 et 40% en volume par rapport au volume total dudit matériau composite.

## Patentansprüche

1. Verfahren zur Herstellung eines Verbundmaterials aus einer organischen Flüssigkeit, umfassend die Herstellung eines Geopolymers durch Auflösung/Polykondensation einer Alumino-Silikat-Quelle in einer Aktivierungslösung, die die organische Flüssigkeit enthält, wobei das Verfahren die nachstehenden Schritte umfasst:
a) Herstellen einer Aktivierungslösung, die die organische Flüssigkeit und zumindest ein Tensid enthält, wobei das Tensid in einem Anteil zwischen 1 und 10 Vol.-%, bezogen auf das Gesamtvolumen der Lösung, vorliegt,
b) Hinzufügen von zumindest einer Alumino-Silikat-Quelle zu der in Schritt (a) gewonnenen Lösung,
c) Aussetzen des in Schritt (b) gewonnenen Gemischs Bedingungen, die das Aushärten des Geopolymers ermöglichen,
wobei die organische Flüssigkeit zwischen 20 und 70 Vol.-%, bezogen auf das Gesamtvolumen des Verbundmaterials, ausmacht, und
wobei die organische Flüssigkeit höchstens 50 Masse-% Triglyceride, bezogen auf die Gesamttrockenmasse der organischen Flüssigkeit, enthält.

2. Verfahren nach Anspruch 1,
**dadurch gekennzeichnet, dass** die organische Flüssigkeit zumindest ein Element, ausgewählt aus der Gruppe bestehend aus einem aliphatischen Kohlenwasserstoff; einem aromatischen Kohlenwasserstoff; einem chlorierten Lösungsmittel; einem sauerstoffhaltigen Lösungsmittel wie einem Alkohol, einem Keton, einem Ester, einem Glykolester und einem Etheroxid; einem Alkylphosphat oder einem Alkylchlorid, ist oder enthält.

3. Verfahren nach Anspruch 1 oder 2,
**dadurch gekennzeichnet, dass** die organische Flüssigkeit zumindest ein Element, ausgewählt aus der Gruppe bestehend aus einer kommerziellen Szintillationsflüssigkeit, Benzol, Toluol, Xylol, Ethylbenzol, Kerosin, Hexan, Cyclohexan, Octan, Ethylcyclohexan, Dodekan, Eicosan, Phenol, Dichlormethan, Trichlorethan, Dichlorbenzol, Trichlorethylen, 2-Octanon, 4-Dodekanon, Tributylphosphat (TBP), Tetrahydrofuran (THF) und Diethylether, ist oder enthält.

4. Verfahren nach einem der Ansprüche 1 bis 3,
**dadurch gekennzeichnet, dass** die organische Flüssigkeit in geträgerter Form vorliegt.

5. Verfahren nach Anspruch 4,
**dadurch gekennzeichnet, dass** der Träger Erde, Sand, Ton, Schutt, Granulat, Kies oder eines ihrer Gemische ist.

6. Verfahren nach einem der Ansprüche 1 bis 5,
umfassend ein (oder mehrere) Schwermetall(e), Spurenelement(e) oder Radioelement(e).

7. Verfahren nach einem der vorangehenden Ansprüche,
**dadurch gekennzeichnet, dass** die Aktivierungslösung eine (oder mehrere) Silikatkomponente(n) enthält, die insbesondere aus der Gruppe bestehend aus Kieselsäure, kolloidaler Kieselsäure und Quarzglas ausgewählt ist (sind).

8. Verfahren nach einem der vorangehenden Ansprüche,
**dadurch gekennzeichnet, dass** das Masseverhältnis von Aktivierungslösung/MK, worin die Aktivierungslösung die Masse der die organische Flüssigkeit und ein Tensid enthaltenden Aktivierungslösung (ausgedrückt in g) darstellt und MK die Masse der verwendeten Alumino-Silikat-Quelle (ausgedrückt in g) darstellt, zwischen 0,6 und 2 und insbesondere zwischen 1 und 1,5 liegt.

9. Verfahren nach einem der vorangehenden Ansprüche,
**dadurch gekennzeichnet, dass** der Aktivierungslösung in Schritt (b) zusätzlich zu der Alumino-Silikat-Quelle Sand, ein Granulat und/oder Feingut hinzugefügt werden kann.

10. Verfahren nach einem der vorangehenden Ansprüche,
**dadurch gekennzeichnet, dass** die Bedingungen, die das Aushärten in Schritt (c) ermöglichen, einen Nachbehandlungsschritt, gegebenenfalls gefolgt von einem Trocknungsschritt, umfassen.

11. Verfahren zur Behandlung und/oder Inertisierung einer organischen Flüssigkeit, umfassend die Herstellung eines Verbundmaterials aus der organischen Flüssigkeit mit einem Verfahren nach einem der vorangehenden Ansprüche.

12. Verbundmaterial, hergestellt mit einem Verfahren nach einem der Ansprüche 1 bis 10,
**dadurch gekennzeichnet, dass** es in Form einer Geopolymermatrix vorliegt, in die Mikrokügelchen und/oder Nanokügelchen aus organischer Flüssigkeit eingebettet sind, und dass die organische Flüssigkeit zwischen 20 und 70 Vol.-%, bezogen auf das Gesamtvolumen des Verbundmaterials, ausmacht.

13. Verbundmaterial nach Anspruch 12,
**dadurch gekennzeichnet, dass** die organische Flüssigkeit in die Geopolymermatrix bis zu einem Einbringungsanteil zwischen 20 und 60 %, insbesondere zwischen 20 und 50 % und insbesondere zwischen 20 und 40 Vol.-%, bezogen auf das Gesamtvolumen des Verbundmaterials, eingebracht ist.

## Claims

1. Method for preparing a composite material from an organic liquid, consisting of preparing a geopolymer by dissolution/polycondensation of an aluminosilicate source in an activation solution comprising said organic liquid, said method comprising the following steps:
a) preparing an activation solution comprising said organic liquid and at least one surfactant, said surfactant being present in a proportion comprised between 1 and 10 % by volume based on the total volume of said solution,
b) adding to the solution obtained in step (a) at least one aluminosilicate source,
c) submitting the mixture obtained in step (b) to conditions allowing hardening of the geopolymer
said organic liquid representing between 20 and 70% by volume based on the total volume of said composite material, and
said organic liquid comprising at most 50% by mass of triglycerides based on the total dry mass of said organic liquid.

2. Method according to claim 1, **characterized in that** said organic liquid is or comprises at least one element selected from the group consisting of an aliphatic hydrocarbon; an aromatic hydrocarbon; a chlorinated solvent; an oxygenated solvent such as an alcohol, a ketone, an ester, a glycol ester and an ether-oxide; an alkyl phosphate or an alkyl chloride.

3. Method according to claim 1 or 2, **characterized in that** said organic liquid is or comprises at least one element selected from the group consisting of a commercial scintillator liquid, benzene, toluene, xylene, ethylbenzene, kerosene, hexane, cyclohexane, octane, ethylcyclohexane, dodecane, eicosane, phenol, dichloromethane, trichloroethane, dichlorobenzene, trichloroethylene, 2-octanone, 4-dodecanone, tributyl phosphate (TBP), tetrahydrofurane (THF) and diethyl ether.

4. Method according to any of claims 1 to 3, **characterized in that** said organic liquid is in a supported form.

5. Method according to claim 4, **characterized in that** said support is earth, sand, clay, rubble, granulate, gravel or one of their mixtures.

6. Method according to any of claims 1 to 5, comprises one (or several) heavy metal(s), trace element(s) or radioelement(s).

7. Method according to any of the preceding claims, **characterized in that** said activation solution contains one (or several) silicate component(s) notably selected from the group consisting of silica, colloidal silica and glassy silica.

8. Method according to any of the preceding claims, **characterized in that** the activation solution/MK mass ratio with the activation solution term representing the mass of activation solution containing the organic liquid and a surfactant (expressed in g) and MK representing the aluminosilicate source mass (expressed in g) used is comprised between 0.6 and 2 and notably between 1 and 1.5.

9. Method according to any of the preceding claims, **characterized in that**, in addition to said aluminosilicate source, sand, granulate and/or fines may be added to the activation solution during said step (b).

10. Method according to any of the preceding claims, **characterized in that** the conditions allowing hardening during said step (c) comprise a curing step optionally followed by a drying step.

11. Method for treatment and/or inertization of an organic liquid consisting of preparing a composite material from said organic liquid according to a method as defined in any of the preceding claims.

12. Composite material prepared according to a method as defined in any of claims 1 to 10, **characterized in that** it appears as a geopolymeric matrix wherein microbeads and/or nanobeads of organic liquid are coated and **in that** said organic liquid represents between 20 and 70% by volume based on the total volume of said composite material.

13. Composite material according to claim 12, **characterized in that** said organic liquid is incorporated into said geopolymeric matrix up to an incorporation level comprised between 20 and 60%, notably between 20 and 50% and, in particular, between 20 and 40% by volume based on the total volume of said composite material.
